# EUROPEAN PATENT APPLICATION

(11) **EP 4 675 863 A1**
(43) Date of publication of application: **07.01.2026**
(21) Application number: 24763019.7
(22) Date of filing: 21.02.2024
(51) Int. Cl.: H01R 13/631, H01R 13/502, H01R 13/40

(54) **CONNECTOR**

(30) Priority: 27.02.2023 CN 202320331123 U
(71) Applicant: Phoenix Contact Asia-Pacific (Nanjing) Co., Ltd., Nanjing, Jiangsu 211100 (CN)
(72) Inventor: ZHANG, Miao, Nanjing, Jiangsu 211100 (CN)
(74) Representative: Vossius & Partner Patentanwälte Rechtsanwälte mbB
(86) International application number: PCT/CN2024/077868
(87) International publication number: WO 2024/179336

(57) **Abstract**

A connector including a first plug core (1) and a second plug core (2). The first plug core is configured to connect to a first device. The first plug core includes a first body (11) and a female barrel (12) integrally formed with the first body. The second plug core is configured to connect to a second device. The second plug core includes a second body (21) and a male barrel (22) integrally formed with the second body. The female barrel is plugged and matched with the male barrel to conduct the first device and the second device. When the connector is installed, the problem caused by the incorrect installation of the plug module does not need to be considered, the connection and installation process of the battery pack is effectively simplified, the installation complexity is reduced, and the likelihood of connector installation errors is reduced. As such, the connector can effectively realize the smooth installation and connection of the battery pack.

## Description

### TECHNICAL FIELD

This application relates to the technical field of electrical device, and particularly, to a connector.

### BACKGROUND

As a conductive structure between two devices or systems, a connector plays an important role in terms of current or signal transmission. For example, energy storage battery packs are connected by a plug-in connection which generally includes two parts respectively arranged on the two devices or systems, with one part fixedly arranged on the battery pack and the other part functioning as a floating end. The two parts are plugged together to establish an electrical connection between the battery packs.

Currently, openings of the fixed part and the floating part of the connector are completely identical, which may result in a risk of reverse installation during an installation process. If the connector of one battery pack is incorrectly installed, it may cause that the battery pack cannot be installed with other battery packs.

In the related technology, the connector includes two plug cores that may be plugged and matched with each other. Each plug core includes a mounting shell and a plug module. The mounting shell is typically secured to a corresponding device by means of fasteners such as screws. A middle portion of the mounting shell is generally provided with a mounting port for installation of the plug module, and structural features such as buckles are arranged on both sides of the mounting port to secure the plug module in place. A plurality of different types of plug modules, such as signal modules and power modules, are generally installed in each mounting port. However, when a product adopts a modular assembly design, there is a possibility of errors in modular installation during usage by customers. That is, if there are a power module and a signal module, they need to be installed on a frame in a specific order, otherwise, the battery pack in which the connector is located cannot be installed.

### SUMMARY

An objective of the present application is to provide a connector that solves the problem in the prior art that different types of plug modules are prone to be installed incorrectly during the installation of the connector, resulting in that the battery pack where the connector is located cannot be installed.

To this end, the present application adopts the following technical solution:
A connector, including: a first plug core and a second plug core. The first plug core is configured to connect to a first device, and the first plug core includes a first body and a female barrel integrally formed with the first body. The second plug core is configured to connect to a second device, and the second plug core includes a second body and a male barrel integrally formed with the second body. The female barrel is plugged and matched with the male barrel to conduct the first device and the second device.

Optionally, the first plug core includes: a pin arranged within the female barrel; and a plug cover arranged on the female barrel to serve as a positive or negative electrode of the first plug core.

Optionally, the pin is inserted into the barrel, and the plug cover is clamped with the female barrel. The plug cover partially extends into the female barrel and abuts against an end surface of the pin to ensure the pin in the female barrel.

Optionally, multiple female barrels are provided.

Optionally, the first plug core includes a signal terminal arranged on the first body.

Optionally, a cross-section of the second body is rectangular, and mounting threaded holes for installing screws connected to the second device are formed on both sides of the second body. Two of the mounting threaded holes are asymmetrically arranged along a central axis of the second body.

Optionally, fixed threaded holes for installing screws connected to the second device are formed on both sides of the mounting threaded holes of the second body.

Optionally, the first plug core further includes a guiding shell arranged on the first body, and the female barrel arranged in the guiding shell. The second plug core further includes an assembly shell arranged on the second body and plugged and matched with the guiding shell, and the male barrel arranged in the assembly shell.

Optionally, installation holes are formed in the first body and washers are arranged in the installation holes, with first floating gaps formed between the washers and the installation holes. Screws are arranged through the washers. One end of each screw is in contact with the washer, and the other end of the screw passes through the washer and is connected to the first device.

Optionally, installation portions for installing floating screws are formed in the first body, second floating gaps are formed between the floating screws and the installation portions. One end of each floating screw tightly abuts against the first body, and the other end of the floating screw passes through the installation portions and is connected to the first device.

### Beneficial effects of the present application:

The female barrel is integrally formed with the first body and the male barrel is integrally formed with the second body, such that the first plug core and the second plug core no longer require separate installation of plug modules. Only the first body and the second body need to be correctly connected with the first device and the second device, respectively, and the first device and the second device can be conducted through the plugging and matching of the first plug core and the second plug core. When the connector is installed, the problem caused by the incorrect installation of the plug module does not need to be considered, the connection and installation process of the battery pack is effectively simplified, the installation complexity is reduced, and the likelihood of connector installation errors is reduced. As such, the connector can effectively realize the smooth installation and connection of the battery pack.

### BRIEF DESCRIPTION OF THE DRAWINGS

Figure 1 is a schematic diagram of a structure of a connector according to an embodiment of the present application;
Figure 2 is a sectional view of a connector according to an embodiment of the present application;
Figure 3 is a schematic diagram of a structure of a second plug core of a connector according to an embodiment of the present application;
Figure 4 is a schematic diagram of a structure of a first plug core of a connector according to an embodiment of the present application;
Figure 5 is a sectional view of a first plug core of a connector according to an embodiment of the present application;

In the drawings:
1. first plug core; 11. first body; 111. installation hole; 112. washer; 113. first floating gap; 114. installation portion; 115. second floating gap; 12. female barrel; 122. pin; 123. plug cover; 124. signal terminal; 13. guiding shell; 131. guiding slope; 132. guiding rib; 133. sealing groove; 2. second plug core; 21. second body; 211. mounting threaded hole; 212. fixed threaded hole; 22. male barrel; 23. assembly shell; 231. guiding gap; 232. assembly slope; 3. floating screw; 31. first part; 32. second part.

### DETAILED DESCRIPTION OF THE PREFERRED EMBODIMENTS

Below, the present application will now be described in further detail with reference to the accompanying drawings and embodiments. It can be understood that the specific embodiments described herein are provided only for illustrative purposes and are not intended to limit the present application. Additionally, it should be noted that for the sake of clarity, only parts relevant to the present application are shown in the accompanying drawings, rather than the entire structure.

In the description of the present application, unless expressly defined or limited otherwise, the terms "connect", "engage", and "secure" should be broadly construed broadly to include: fixed connections, detachable connections, or integral formation; mechanical connection or electrical couplings; direct connection or indirect connections via an intermediate medium; and can be a physical connection between two components or interaction relationships between two components. For ordinary technical personnel in this field, the specific meanings of the above terms in the present application should be interpreted according to their contextual usage herein.

In the present application, unless expressly defined or limited otherwise, a first feature being above or below a second feature may include direct contact between the first and second features or may include contact through another feature between the first and second features instead of direct contact. Furthermore, the first feature being "above", "over", and "on" the second feature includes the first feature being directly above or diagonally above the second feature or simply indicating that the first feature is at a higher level than the second feature. The first feature being "below", "under", and "underneath" the second feature includes the first feature being directly below or diagonally below the second feature or simply indicating that the first feature is at a lower level than the second feature.

In the description of this embodiment, the terms such as "up", "down", "right" refer to the orientations or position relationships shown in the accompanying drawings. These terms are used solely for descriptive convenience and to simplify operational explanations, and do not imply that the referenced device or component must maintain a particular orientation or be constructed and operated in a specific orientation. Therefore, these terms should not be understood as a limitation of the present application. In addition, these terms should not be construed as limiting the scope of this application. Additionally, the terms "first" and "second" are used only for descriptive distinction and carry no special significance.

An embodiment of the present application provides a connector. In the connector, a female barrel is integrally formed with a first body and a male barrel is integrally formed with a second body, such that when the connector is installed, only the first body and the second body need to be connected with the first device and the second device, respectively, and the first device and the second device can be conducted through the plugging and matching of the first plug core and the second plug core. Compared to the related technology in which a plug module needs to be installed separately, an installation process of the connector provided by the present application is more simplified, so that the installation complexity is effectively reduced, the likelihood of installation errors is reduced, the installation efficiency of the connector is improved, ensuring that the battery pack connected with the connector can be smoothly installed and conducted.

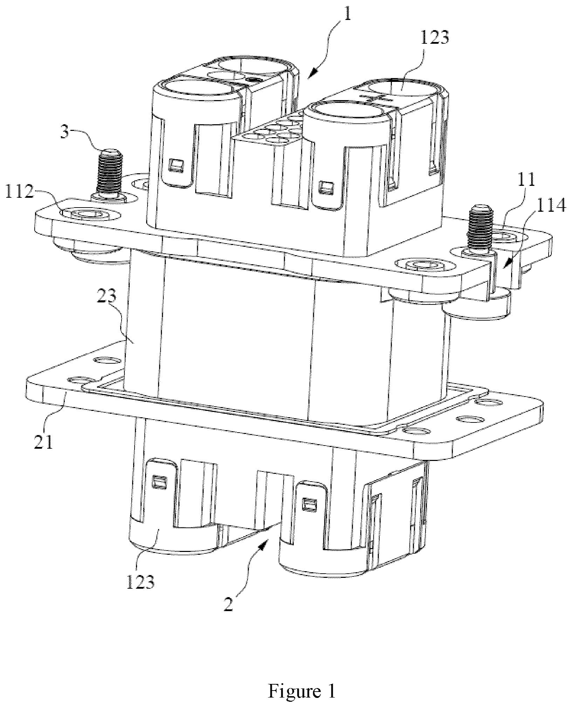

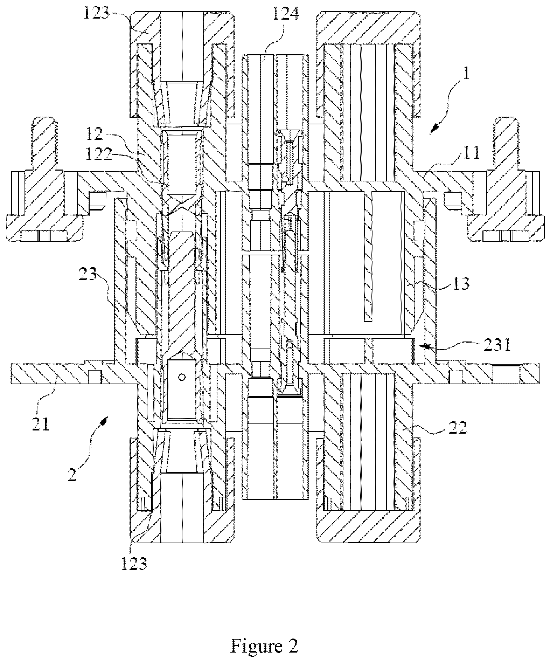

Referring to Figures 1 and 2, the connector includes a first plug core 1 and a second plug core 2. The first plug core 1 is configured for detachable connection with the first device. The first plug core 1 includes a first body 11 and a female barrel 12 integrally formed with the first body 11. The second plug core 2 is configured for fixed connection with a second device. The second plug core 2 includes a second body 21 and a male barrel 22 integrally formed with the second body 21. The female barrel 12 and the male barrel 22 are plugged and matched with each other to conduct the first device and the second device.

Specifically, the first body 11 is plate-shaped, with one side of the first body 11 matched with the surface of the housing of the first device. The first body 11 is connected to the first device by installing screws in slot or hole structures such as waist-shaped holes, so that the first plug core 1 can move within a certain range relative to the first device to facilitate alignment with the second plug core 2.

A cross-section of the first body 11 can be square, circular, or any other shape that is adaptable to the connection with the first device, which is not limited in the present application. The female barrel 12 is arranged through the middle portion of the first body 11, with one end of the female barrel 12 arranged in the first device and electrically connected to circuitry within the first device, and the other end of the female barrel 12 passing through the first body 11 and extending out of the first device to be plugged with the male barrel 22. The female barrel 12 is integrally formed with the first body 11. That is, the first body 11 containing the female barrel 12 is formed through injection molding or other methods during the production process.

The second body 21 is directly secured to the second device by screws or other fasteners. The shape of the second body 21 can be configured to match the shape of the first body 11. The way in which the male barrel 22 is arranged is the same as that of the female barrel 12, and details thereof are not repeated here.

By integrally forming the female barrel 12 with the first body 11 and integrally forming the male barrel 22 with the second body 21, the installation of a plug module is no longer required separately. By connecting only the first body 11 and the second body 21 with the first device and the second device respectively, the conduction between the first device and the second device can be quickly realized through the plugging of the female barrel 12 and the male barrel 22. Therefore, when the connector is installed, the problem caused by the incorrect installation of the plug module does not need to be considered, the connection and installation process of the battery pack is effectively simplified, the installation complexity is reduced, and the likelihood of connector installation errors is reduced. As such, the connector can effectively realize the smooth installation and connection of the battery pack.

Referring to Figure 2, in some embodiments of the present application, the first plug core 1 includes a pin 122 and a plug cover 123. The pin 122 is arranged inside the female barrel 12. The female barrel 12 is arranged on the female barrel 12 to serve as a positive or negative electrode of the first plug core 1.

Specifically, the female barrel 12 is hollow, and the pin 122 is arranged inside the female barrel 12. The female barrel 12 can be provided with a clamping structure such as a buckle to secure the pin 122. One end of the pin 122 is connected to a wire to conduct with a corresponding device, and the other end of the pin 122 is connected to a pin 122 inside the male barrel 22. The plug cover 123 is provided on one end of the female barrel 12 located at the first device. The plug cover 123 can be coated with different pigments to indicate whether it is a positive or negative electrode. In this embodiment, the plug cover 123 that serves as the positive electrode is coated with orange pigment, while the plug cover 123 that serves as the negative electrode is coated with black pigment.

The assembly of the first plug core 1 is completed by directly installing the pin 122 into the female barrel 12 and buckling the plug cover on the female barrel 12. The differently coloured plug covers 123 indicate whether they are positive or negative electrodes, ensuring more definite orientation of the first plug core 1 during installation and further reducing the installation difficulty.

Referring to Figure 2, in some embodiments of the present application, the pin 122 is inserted into the female barrel 12, and the plug cover 123 is clamped with the female barrel 12 through a buckle. The plug cover 123 partially extends into the female barrel 12 and abuts against an end surface of the pin 122 to secure the pin 122 in the female barrel 12.

Specifically, the pin 122 is arranged at a middle portion of female barrel 12. The plug cover 123 is provided with a through-hole for accommodating wires, and a buckle is provided on an outer side wall of the through-hole. The buckle is matched with an outer side wall of the female barrel 12 to achieve the connection between the plug cover 123 and the female barrel 12. The plug cover 123 is also provided with a stopper for securing the pin 122. A bottom end of the stopper is in contact with an upper surface of the pin 122 to secure the pin 122. The bottom end of the stopper is a movable end, which can move outward along a diameter direction of the female barrel 12.

During the production process of the female barrel 12, the pin 122 can be secured inside the female barrel 12 through the clamping and fixing of the plug cover 123 and the female barrel 12. The installation process is simple, less time-consuming, which is beneficial to improving production efficiency. For maintenance or replacement of the pin 122, the bottom end of the stopper is moved outward along the diameter direction by a pin extractor, so that the pin 122 can be easily withdrawn from the plug cover 123, which is convenient for maintenance and replacement of the pin 122.

Referring to Figures 1 and 2, in some embodiments of the present application, a plurality of female barrels 12 are provided. Specifically, the first body 11 can be provided with a plurality of female barrels 12, such as two groups of parallel female barrels 12. The first group of female barrels 12 is provided with orange or red plug covers 123 as positive electrodes, and the second group of female barrels 12 is provided with black plug covers 123 as negative electrodes. This enables the female barrels 12 to be conducted with various power terminals inside the first device, effectively improving the adaptability of the female barrels 12.

Referring to Figures 1 and 2, in some embodiments of the present invention, the first plug core 1 includes a signal terminal 124. The signal terminal 124 is integrally formed with the first body 11. Specifically, the signal terminal 124 can be arranged between the two groups of female barrels 12 mentioned above, and corresponding pins 122 can also be arranged inside the signal terminal 124 to communicate with signal transmission terminals in the first device. By integrally arranging the signal terminal 124 and the female barrels 12, the first plug core 1 integrates both power and signal modules, thereby improving the applicability of the first plug core 1 and enabling the first plug core 1 to conform to connections between various devices.

The structure of the second plug core 2 is the same as that of the first plug core 1, and the two are correspondingly arranged. The detailed structure of the second plug core 2 will not be redundantly described herein. During the installation process of the connector, only the first plug core 1 and the second plug core 2 need to be installed in the correct manner, and the female barrel 12 can be plugged and matched with the male barrel 22, so that the operator does not need to consider whether the module types are matched, thereby further reducing the installation difficulty.

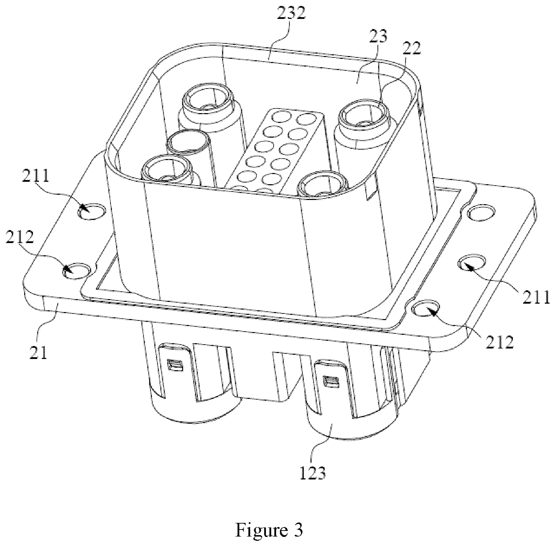

As shown in Figure 3, in some embodiments of the present application, a cross-section of the second body 21 is rectangular. Mounting threaded holes 211 are formed on both sides of the second body 21 for installing screws connected to the second device, respectively. The two mounting threaded holes 211 are asymmetrically arranged along a central axis of the second body 21.

Specifically, the mounting threaded holes 211 are formed at middle portions on both left and right sides of the second body 21. A line connecting the two mounting threaded holes 211 is not parallel to any side edge of the second body 21, so that the two mounting threaded holes 211 are arranged in a staggered manner. By arranging the two mounting threaded holes 211 in a staggered manner, during installation of the second body 21, the two mounting threaded holes 211 can be aligned with corresponding threaded holes on the second device when the second body is oriented in a correct installation direction. Otherwise, the mounting threaded holes 211 cannot be aligned with corresponding threaded holes on the second device, and the installation cannot proceed. Therefore, the situation that the second plug core 2 is installed reversely can be prevented, so that the operator can quickly determine the installation direction of the second plug core 2, and the installation difficulty is further reduced.

Referring to Figure 3, in some embodiments of the present application, fixed threaded holes 212 are formed on both sides of the mounting threaded holes 211 of the second body 21 for installing screws connected to the second device, thereby allowing the second plug core 2 to be more securely installed on the second device. During the installation process, customers can choose to secure the second plug core 2 to the second device using either the mounting threaded holes 211 or the fixed threaded holes 212. It should be understood that the number of the fixed threaded holes 212 can be designed according to the size of the second body 21 and is not limited to the manners in the above examples.

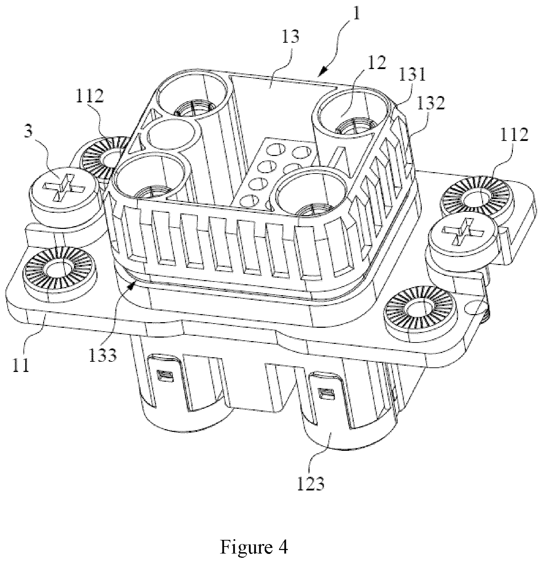

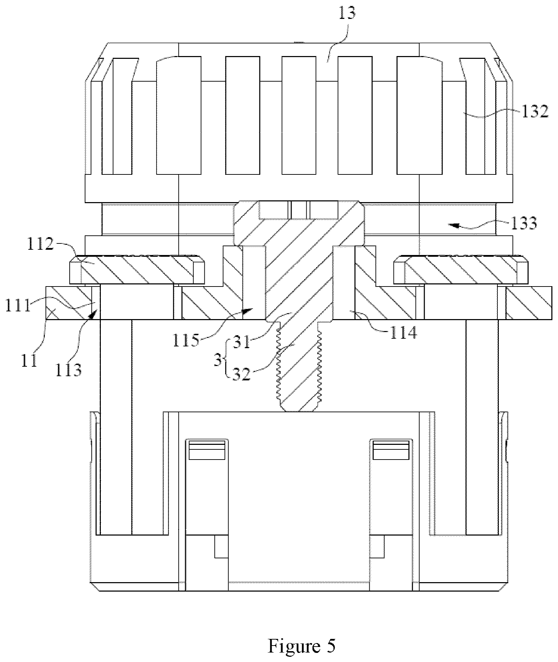

Referring to Figures 4 and 5, in some embodiments of the present application, installation holes 111 are formed in the first body 11. Washers 112 are arranged in the installation holes 111, with first floating gaps 113 formed between the washers 112 and the installation holes 111. Screws are arranged through the washers 112, one end of the screw being in contact with the washer 112, and the other end of the screw passing through the washer 112 and connected to the first device.

Specifically, the installation holes 111 are waist shaped holes, and a longitudinal section of the washer 112 is T-shaped, with a circular plate at its upper end and a cylinder formed integrally with the circular plate at its lower end. An outer diameter of the cylinder is smaller than a hole diameter of the installation holes 111, and a height of the cylinder is greater than a depth of the installation holes 111, so that a certain gap is formed between a lower side of the circular plate and a side surface of the first body 11. A gap between the circular plate and the plug core, as well as a gap between the cylinder and the installation holes 111, together form a first floating gap 113. The screw passes through the circular plate and the cylinder of the washers 112 and is then connected to the first device. Specifically, the gap between the circular plate and the first body 11, as well as the gap between the cylinder and the installation holes 111, can be designed depending on actual installation conditions, which is not limited in the present application. In this embodiment, the gap between the circular plate and the first body 11 is 0.2 mm, and the gap between the cylinder and a hole wall of the installation holes 111 is 3.2 mm.

By arranging the screw in the installation holes 111 and the washers 112, the first body 11 can be connected to a housing of the first device. When the female barrel 12 is plugged with the male barrel 22, the first plug core 1 can move to a certain extent along with the plugging of the female barrel 12 with the male barrel 22, because the second plug core 2 cannot move relative to the second device. This enables the female barrel 12 to be aligned with the male barrel 22, reducing the possibility of misalignment between the female barrel 12 and the male barrel 22.

Referring to Figures 4 and 5, in some embodiments of the present application, installation portions 114 for installing floating screws 3 are formed in the first body 11. The installation portion 114 can be configured as an installation hole or an installation groove with a notch, or as an installation hole or an installation groove without a notch. Second floating gaps 115 are formed between the floating screws 3 and the installation portions 114. One end of the floating screw 3 can be tightly abutted against the first body 11, and the other end of the floating screw 3 passes through the installation portion 114 and is connected to the first device.

Specifically, a U-shaped opening is formed on both right and left sides of the first body 11 as the installation portion 114. The installation portion 114 is arranged between two installation holes 111. A side edge of the installation portion 114 protrudes upwards to form a cushion block. A screw rod part of the floating screw 3 includes a first part 31 and a second part 32. The first part 31 is located in the cushion block and the installation portion 114, and a length of the first part 31 is greater than a thickness of the cushion block and the installation portion 114, so that a certain gap can be formed between a nut and the cushion block. At the same time, an outer diameter of the first part 31 is smaller than a size of the installation portion 114, so that a certain gap is formed between the first part 31 and the installation portion 114, thereby forming a second floating gap 115. The second part 32 is threaded to connect with the housing of the first device, and an outer diameter of the second part 32 is smaller than that of the first part 31. Specifically, the size of the second floating gaps 115 can be designed depending on actual installation requirements, which is not limited in the present application.

By arranging the floating screw 3 in the installation portion 114 and limiting a floating range between the floating screw 3 and the first body 11 by the cushion block, the first body 11 can move correspondingly within the second floating gap 115, facilitating the smooth plugging of the female barrel 12 and the male barrel 22. It should be understood that the floating screws 3 can be arranged either in the installation holes 111 only, or in the installation portion 114 only, or both in the installation holes 111 and the installation portion 114. The specific arrangement of the floating screws 3 can be adjusted depending on actual installation needs, which is not limited in the present application.

Referring to Figures 3 and 4, in some embodiments of the present invention, the first plug core 1 further includes a guiding shell 13. The guiding shell 13 is arranged on the first body 11, and the female barrel 12 is arranged in the guiding shell 13. The second plug core 2 also includes an assembly shell 23. The assembly shell 23 is arranged on the second body 21 and is plugged and matched with the guiding shell 13, and the male barrel 22 is arranged in the assembly shell 23.

Specifically, the guiding shell 13 is formed by protruding from the side of the first main body 11 away from the first device and extending in the direction away from the first device. A cross-section of the guiding shell may be polygonal, such as rectangular, or curved, such as circular. One end of the female barrel 12 passes through the first body 11 and extends into the guiding shell 13, while the other end is arranged in the first device and electrically connected to the circuitry in the first device.

The assembly shell 23 is formed by protruding and extending from the side of the second body 21 away from the second device. A shape of the assembly shell 23 is designed according to a shape of the guiding shell 13, and the assembly shell can be in guide fit with the guiding shell 13. The way in which the male barrel 22 is arranged is the same as that of the female barrel 12 and will not be redundantly described herein.

When the connector is plugged to conduct the first device and the second device, the first plug core 1 is first aligned with the second plug core 2, and then the guiding shell 13 is plugged with assembly shell 23. Under a guiding action of the guiding shell 13 and the assembly shell 23, the female barrel 12 can be plugged and matched with the male barrel 22. Therefore, when the female barrel 12 is plugged with the male barrel 22, the plugging is quickly completed by using the guiding relationship between the guiding shell 13 and the assembly shell 23, so that the first plug core 1 and the second plug core 2 do not need to be provided with a separate guiding structure. The guiding shell 13 and the assembly shell 23 are respectively formed by protrusions formed by extending the first body 11 and the second body 21, effectively reducing an overall volume of the connector and saving materials used in the production process of the connector. This not only lowers the production cost of the connector but also improves the material utilization.

Referring to Figure 2, in some embodiments of the present application, a cross-sectional area of the assembly shell 23 is greater than a cross-sectional area of the guiding shell 13, and a guiding gap 231 for the insertion of the guiding shell 13 is formed between an inner side of the assembly shell 23 and the male barrel 22. An inner side wall of the assembly shell 23 is in sliding fit with an outer side wall of the guiding shell 13.

Specifically, a cross-section of the assembly shell 23 and a cross-section of the guiding shell 13 are both rectangular. The length and width of the inner side of the assembly shell 23 are both greater than the length and width of the outer side of the guiding shell 13. The male barrel 22 is arranged at the middle portion of the assembly shell 23, and an end surface of the male barrel 22 can be flush with an end surface of the assembly shell 23. A distance is maintained between the male barrel 22 and the inner side wall of the assembly shell 23 to form the above-mentioned guiding gap 231. Further, an end surface of the female barrel 12 can be flush with an end surface of the guiding shell 13, so that the guiding shell 13 can be fully inserted into the assembly shell 23.

By forming the guiding gap 231, when the female barrel 12 is plugged with the male barrel 22, the guiding shell 13 is inserted into the guiding gap 231 in the assembly shell 23. The outer side wall of the guiding shell 13 is in sliding fit with the inner side wall of the assembly shell 23, thereby producing a guiding effect. As the guiding shell 13 is gradually inserted into the assembly shell 23, the plugging of the male barrel 22 with the female barrel 12 can be completed smoothly.

Referring to Figure 4, in some embodiments of the present application, an outer side wall of the side where the guiding shell 13 is inserted into the assembly shell 23 is provided with a guiding slope 131 in sliding fit with the assembly shell 23.

Specifically, an open end of the guiding shell 13 is chamfered to form the guiding slope 131. The guiding slope 131 is oriented towards the assembly shell 23. An inclination angle of the guiding slope can be designed depending on requirements of plugging and matching, such as 45° or 30°, etc.

By arranging the guiding slope 131, the cross-sectional area of one end where the guiding shell 13 is inserted into the assembly shell 23 can be reduced, thereby facilitating the insertion of the guiding shell 13 into the assembly shell 23. At the same time, the guiding slope 131 can also play a guiding role. When the guiding shell 13 is plugged with the assembly shell 23, the guiding slope 131 can be in sliding fit with the inner side wall of the assembly shell 23, so that the guiding shell 13 can smoothly slide into the assembly shell 23.

Referring to Figure 4, in some embodiments of the present application, the outer side wall of the guiding shell 13 is provided with a plurality of grooves, and guiding ribs 132 are formed between two adjacent grooves.

Specifically, the grooves extend vertically, and the plurality of grooves are equidistantly distributed along an axis of the guiding shell 13 to form a plurality of guiding ribs 132. One end of the guiding rib 132 adjacent to the guiding slope 131 can be connected to the guiding slope 131 and is also provided with a slope with a corresponding inclination angle. The guiding rib 132 can also be secured to the outer side wall of the guiding shell 13 by adhesion or welding. In addition, an annular groove is formed on the outer side wall of the guiding shell 13 for installation of the guiding rib 132.

By arranging the grooves, the material used for manufacturing the guiding shell 13 can be effectively reduced, and the guiding rib 132 can effectively fill the gap formed when the guiding shell 13 is inserted into the guiding gap 231, so that the guiding shell 13 and the assembly shell 23 are stably plugged and not easy to shake. At the same time, the arrangement of the guiding rib 132 can also improve the strength of the guiding shell 13, and reduce the possibility that the guiding shell 13 is damaged in the process of plugging the guiding shell 13 and the assembly shell 23.

Referring to Figure 3, in some embodiments of the present application, the inner side wall of the assembly shell 23 which is designed for insertion of the guiding shell 13 is provided with an assembly slope 232 in sliding fit with the guiding shell 13.

Specifically, the inner side wall of the assembly shell 23 is chamfered to form an assembly slope 232. An inclination angle of the assembly slope can be designed according to the guiding slope 131 of the guiding shell 13, so that the assembly slope 232 can be matched with the guiding slope 131. By arranging the assembly slope 232, an opening area of the assembly shell 23 is increased, facilitating smooth insertion of the guiding shell 13 into the assembly shell 23. The assembly slope 232 is matched with the guiding slope 131, which can also play a role in limiting and guiding the insertion of the guiding shell 13. As the guiding slope 131 is in close contact with the assembly slope 232, the guiding shell 13 can be pushed to keep aligned with the assembly shell 23, and the possibility of offset between the guide shell 13 and the assembly shell 23 is reduced.

In some embodiments of the present application, a sealing groove 133 for installing a sealing ring is provided in the outer side wall of the guiding shell 13. The sealing ring abuts against the inner side wall of the assembly shell 23 to seal a gap between the assembly shell 23 and the guiding shell 13.

Specifically, the sealing groove 133 is arranged around the outer side wall of the guiding shell 13 and located on a lower side of the guiding rib 132. The sealing ring is bonded to the sealing groove 133 with glue, and can be made of rubber with one side protruding out of the sealing groove 133 to abut against the inner side wall of the assembly shell 23.

By arranging the sealing ring, when the guiding shell 13 is inserted into the assembly shell 23, a gap between the guiding shell 13 and the assembly shell 23 can be effectively sealed by the sealing ring, thereby improving the sealing performance between the guiding shell 13 and the assembly shell 23.

It is obvious that the above embodiments of the present application are only for the purpose of clearly illustrating the examples provided by the present application and are not intended to limit the embodiments of the present application. For ordinary technicians in the relevant field, various obvious changes, readjustments, and substitutions can be made without departing from the scope of protection of this application. It is not necessary and impossible to exhaustively list all embodiments herein. Any modifications, equivalent substitutions, and improvements made within the spirit and principles of the present application shall be included in the protection scope of the claims of the present application.

## Claims

1. A connector, **characterized in that** the connector comprises:
a first plug core (1) configured to connect to a first device, the first plug core (1) comprising a first body (11) and one or more female barrels (12) integrally formed with the first body (11); and
a second plug core (2) configured to connect to a second device, the second plug core (2) comprising a second body (21) and one or more male barrels (22) integrally formed with the second body (21); wherein the female barrels (12) are plugged and matched with the male barrels (22) to conduct the first device and the second device.

2. The connector according to claim 1, **characterized in that** the first plug core (1) further comprises:
one or more pins (122) each arranged within one female barrel (12); and
one or more plug covers (123) each arranged on one female barrel (12) to serve as a positive or negative electrode of the first plug core (1).

3. The connector according to claim 2, **characterized in that** the pin (122) is inserted into the female barrel (12), the plug cover (123) is clamped with the female barrel (12) through a buckle, and the plug cover (123) partially extends into the female barrel (12) and abuts against an end surface of the pin (122) to secure the pin (122) in the barrel (121).

4. The connector according to claim 2, **characterized in that** a plurality of female barrels (12) are provided.

5. The connector according to claim 2, **characterized in that** the first plug core (1) comprises:
a signal terminal (124) arranged on the first body (11).

6. The connector according to any one of claims 1 to 5, **characterized in that** a cross-section of the second body (21) is rectangular, and mounting threaded holes (211) for installing screws connected to the second device are formed on both sides of the second body (21); two of the mounting threaded holes (211) are asymmetrically arranged along a central axis of the second body (21).

7. The connector according to claim 6, **characterized in that** fixed threaded holes (212) for installing screws connected to the second device are formed on both sides of the mounting threaded holes (211) of the second body (21).

8. The connector according to any one of claims 1 to 5, **characterized in that** the first plug core (1) further comprises:
a guiding shell (13) arranged on the first body (11), the female barrel (12) arranged in the guiding shell (13); and
the second plug core (2) further comprises:
an assembly shell (23) arranged on the second body (21) and plugged and matched with the guiding shell (13), the male barrel (22) arranged in the assembly shell (23).

9. The connector according to any one of claims 1 to 5, **characterized in that** installation holes (111) are formed in the first body (11), and washers (112) are arranged in the installation holes (111), with first floating gaps (113) formed between the washers (112) and the installation holes (111), and screws are arranged through the washers (112), one end of each screw being in contact with the washer (112), and the other end of the screw passing through the washer (112) and connected to the first device.

10. The connector according to any one of claims 1 to 5, **characterized in that** installation portions (114) for installing floating screws (3) are formed in the first body (11), and second floating gaps (115) are formed between the floating screws (3) and the installation portions (114), one end of each floating screw (3) tightly abutted against the first body (11), and the other end of the floating screw passing through the installation portion (114) and connected to the first device.
